# EUROPÄISCHE PATENTSCHRIFT

(11) **EP 2 832 252 B1**
(45) Veröffentlichungstag und Bekanntmachung des Hinweises auf die Patenterteilung: **21.09.2016**
(21) Anmeldenummer: 14170397.5
(22) Anmeldetag: 28.05.2014
(51) Int. Cl.: E06B 9/326, A44C 5/18, A44C 5/20, F16G 13/18, F16G 15/00

(54) **Kettenschloss zum Verbinden der Enden von Perlketten**
Chain fastener for connecting the ends of chains of pearls
Fermoir destiné à relier les extrémités de colliers de perles

(30) Priorität: 31.07.2013 DE 102013108210
(43) Veröffentlichungstag der Anmeldung: 04.02.2015
(73) Patentinhaber: MHZ HACHTEL GmbH & Co. KG, D-70771 Leinfelden-Echterdingen (DE)
(72) Erfinder: Hachtel, Jochen, 97990 Weikersheim (DE)
(74) Vertreter: Kohler Schmid Möbus Patentanwälte

(56) Entgegenhaltungen:
- US-A1- 2011 194 895
- US-A1- 2013 037 226

## Beschreibung

Die Erfindung betrifft ein Kettenschloss zum Verbinden der Enden von Perlketten, die in regelmäßigem Abstand auf eine Schnur angeordnete Perlkörper aufweisen.

Solche Perlketten werden zum Öffnen und Schließen von Rollos, Jalousien, Plissees und Raffrollos eingesetzt. Die Perlkörper greifen dazu in die Vertiefungen von entsprechend geformten Zahnrädern ein, die an den Wickelwellen für einen Behang oder für Zugschnüre angeordnet sind. Diese Perlketten werden auch häufig als Endlosketten ausgebildet, indem die beiden Kettenenden durch Anspritzen eines Perlkörpers auf die Schnurenden oder durch ein Kettenschloss miteinander verbunden werden.

Weiter werden Perlketten auch zur Verbindung der senkrechten Lamellen von Vertikal-Jalousien eingesetzt, um deren Winkel verstellen zu können. Zur Verlängerung solcher Perlketten werden ebenfalls Kettenschlösser eingesetzt, welche die Enden zweier kürzerer Perlketten miteinander verbinden.

Bei einer weit verbreiteten Form von Kettenschlössern weisen diese einen hülsenartigen Körper auf, der die Perlkörper an den Kettenenden umschließt. Diese Kettenschlösser sind in der Regel unlösbar, wodurch Sicherheitsprobleme entstehen können. Es besteht insbesondere eine Strangulierungsgefahr für an den Jalousien oder Rollos spielende Kinder. Bei Ausübung einer zu großen Zugkraft an der Perlkette kann es außerdem zu Beschädigungen von Betätigungseinrichtungen oder Lamellen der Jalousien oder Rollos kommen, oder die Endlos-Perlkette könnte reißen.

Zur Vermeidung dieser Probleme wurde in der EP 0 761 118 B1 vorgeschlagen, die Hülse des Kettenschlosses aus zwei getrennten Hälften herzustellen, die rastend miteinander verbindbar und durch eine vorgegebene Öffnungskraft wieder voneinander lösbar sind. Auch in der US 2011/0194895 A1 ist ein ähnliches, aus einer weiblichen und einer männlichen Perlkörperhälfte bestehendes Kettenschloss beschrieben.

Die US 2013/0037226 A1 beschreibt Kettenschlösser mit identischen Perlkörperteilen, die mit Hilfe eines dritten Elements miteinander verbunden werden können.

Die bekannten Lösungen sind jedoch in der Herstellung und Handhabung nicht optimal. Es müssen entweder zwei verschiedene Perlkörperhälften gefertigt oder noch ein zusätzliches Verbindungselement bereitgestellt werden.

Der vorliegenden Erfindung liegt die Aufgabe zugrunde, ein Kettenschloss bereitzustellen, das einfach in der Herstellung und in der Handhabung ist und auch für Endlos-Bedienketten einsetzbar ist.

Die Aufgabe wird gelöst durch ein Kettenschloss mit den Merkmalen des Anspruchs 1.

Das erfindungsgemäße Kettenschloss besteht somit nur aus zwei Teilen, die zusammen einen Perlkörper bilden, der wie die übrigen Perlkörper der Perlkette von einem Zahnrad eines Planetengetriebes aufgenommen werden kann. Es ist keine überstehende Hülse zur Verbindung der letzten Perlkörper vor den Perlkettenenden nötig. Die Perlkörperhälften werden beispielsweise durch Schweißen an den Schnurenden befestigt und weisen zum letzten Perlkörper den gleichen Abstand auf, den die übrigen Perlkörper zueinander haben. Nach Schließen des Kettenschlosses ist das Schloss kaum mehr als solches zu erkennen.

Dabei können die beiden Perlkörperhälften vorzugsweise komplementäre Rastvorsprünge und Rastvertiefungen aufweisen. Die Rastverbindung lässt sich dann ohne ein drittes Element einfach durch Ineinandergreifen der Vorsprünge und Vertiefungen der beiden Hälften herstellen.

Bei einer bevorzugten Ausgestaltung bildet das Kettenschloss im geschlossenen Zustand der Perlkörperhälften einen in der Form und den Außenabmessungen den übrigen Perlkörpern der Perlkette zumindest annähernd entsprechenden Perlkörper. Hierdurch ist ein störungsfreies Bedienen des Rollos, der Jalousie oder des Vorhangs gewährleistet.

Die Perlkörperhälften sind identisch ausgebildet. Dadurch lässt sich sowohl die Fertigung als auch die Montage des Kettenschlosses deutlich vereinfachen. Es muss nicht nach männlichen und weiblichen Teilen unterschieden werden.

Um eine Strangulierungsgefahr durch die Perlkette oder Beschädigungen durch eine zu hohe Zugkraft zu vermeiden, kann die Rastverbindung zwischen den Perlkörperhälften durch eine festgelegte Öffnungskraft wieder lösbar sein. Das Lösen der Verbindung kann dabei zerstörungsfrei erfolgen, sodass das Schloss erneut geschlossen werden kann.

Für eine einfache und kostengünstige Fertigung ist es außerdem von Vorteil, wenn das Kettenschloss aus Kunststoff gefertigt ist und die Perlköperhälften jeweils an die Schnurenden der Perlkette anspritzbar sind. Das Anspritzen der Perlkörperhälften gewährleistet außerdem eine feste Verbindung des Schlosses mit der Schnur der Perlkette.

Die Form des Kettenschlosses ist den Perlkörpern der Kette angepasst. Vorzugsweise kann es im geschlossenen Zustand eine Kugelform oder die Form einer Tonne aufweisen. Dies sind die gängigsten Formen von Perlkörpern. Dabei lassen sich beim erfindungsgemäßen Kettenschloss Durchmesser von weniger als 5 mm erreichen.

Im Folgenden wird ein bevorzugtes Ausführungsbeispiel eines erfindungsgemäßen Kettenschlosses mit Bezug auf die Zeichnung näher beschrieben.

Es zeigen:
- Fig. 1: eine Seitenansicht einer Perlkette mit geöffnetem Kettenschloss;
- Fig. 2: eine Seitenansicht des Kettenschlosses aus Fig. 1 mit geschlossenem Kettenschloss;
- Fig. 3: einen Längsschnitt durch das geöffnete Kettenschloss aus Fig.1;
- Fig. 4: eine perspektivische Ansicht des geöffneten Kettenschlosses aus Fig. 1.

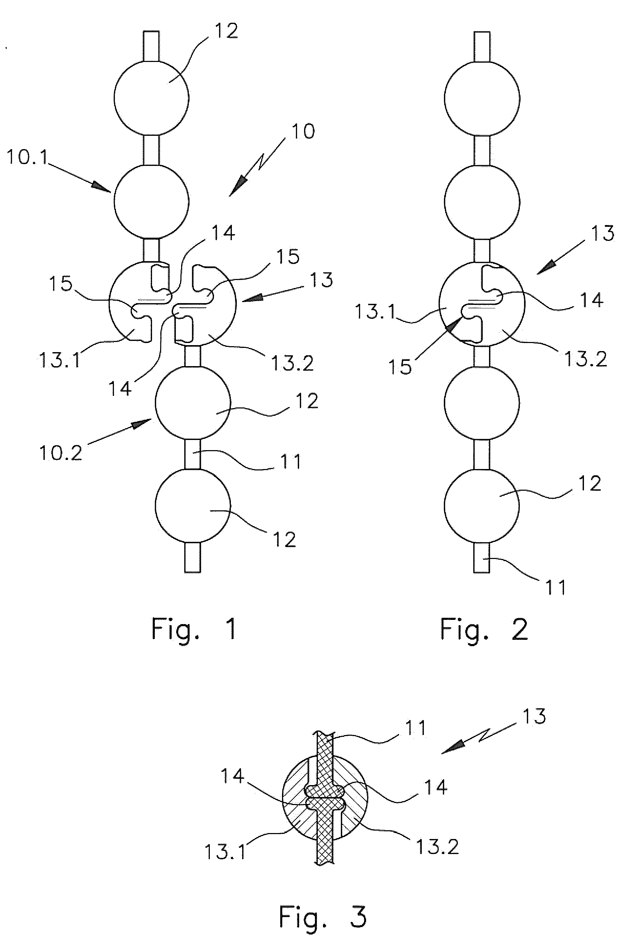

Fig. 1 zeigt die beiden Enden 10.1 und 10.2 einer endlosen Perlkette 10, die auf einer Schnur 11 in regelmäßigem Abstand angeordnete Perlkörper 12 - hier in Form von Kugeln - aufweist. Zur Verbindung der beiden Enden 10.1 und 10.2 der Perlkette 10 ist ein Kettenschloss 13 vorgesehen, das in Längsrichtung der Schnur 11 in zwei identisch ausgebildete Perlkörperhälften 13.1 und 13.2 geteilt und von diesen gebildet wird. Die Perlkörperhälften weisen eine nahezu halbkugelförmige äußere Oberfläche auf. Jede der Perlkörperhälften 13.1 und 13.2 weist außerdem auf der Innenseite Rastvorsprünge 14 und Rastvertiefungen 15 auf, wobei die Rastvorsprünge 14 und die Rastvertiefungen 15 komplementär ausgebildet sind, d. h. die Rastvorsprünge 14 von den Rastvertiefungen 15 aufgenommen werden können, wie Fig. 2 verdeutlicht, die das Kettenschloss 13 im geschlossenen Zustand in der gleichen Seitenansicht wie Fig. 1 zeigt. Im geschlossenen Zustand bildet das Kettenschloss 13 einen den regulären Perlkörpern 12 der Perlkette 10 nahezu entsprechenden Perlkörper, der lediglich etwas länger als die exakt kugelförmigen Perlkörper 12 ausgebildet ist aber quer zur Längsrichtung der Kette 10 den gleichen Durchmesser aufweist wie die Perlkörper 12. Die Rastverbindung zwischen den Perlkörperhälften 13.1, 13.2 lässt sich durch eine vorgegebene Kraft wieder lösen, um Verletzungsgefahren oder Beschädigungen durch zu hohe Bedienkräfte ausschließen zu können.

Fig. 3 zeigt einen in der Zeichenebene der Fig. 2 liegenden Schnitt durch das geschlossene Kettenschloss 13. Hieraus ist die Verbindung der Hälften 13.1 und 13.2 mit der Schnur 11, die durch Anspritzen hergestellt wird, zu sehen. Die Schnurenden sind jeweils mit einem Bund 17 versehen, der ein Lösen der Schnur 11 aus den Perlkörperhälften 13.1, 13.2 verhindert.

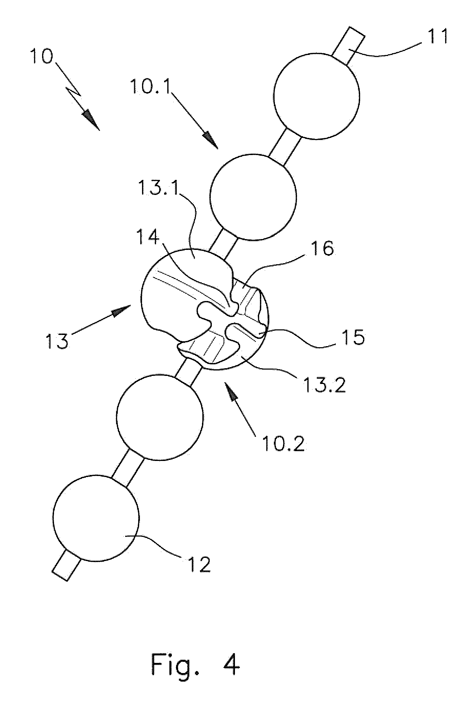

Die perspektivische Darstellung des geöffneten Kettenschlosses 13 in Fig. 4 verdeutlicht die von der Kugelform leicht abweichende äußere Oberfläche der Perlkörperhälfte 13.1 sowie eine Vertiefung 16 zur Aufnahme der Schnur 11 des Kettenendes 10.1, die in identischer Form auch in der Perlkörperhälfte 13.2 vorhanden, in Fig. 4 jedoch verdeckt ist. Außerdem sind die Vorsprünge 14 und Vertiefungen 15 auf den Innenseiten der Perlkörperhälften 13.1, 13.2 zu erkennen.

## Patentansprüche

1. Kettenschloss zum Verbinden der Enden (10.1, 10.2) von Perlketten (10), die in regelmäßigem Abstand auf eine Schnur (11) angeordnete Perlkörper (12) aufweisen, **dadurch gekennzeichnet, dass** es aus zwei identisch ausgebildeten Perlkörperhälften (13.1, 13.2) besteht, die durch eine Rastverbindung miteinander verbindbar sind und die jeweils an einem Schnurende der Perlkette (10) befestigbar sind.

2. Kettenschloss nach Anspruch 1, **dadurch gekennzeichnet, dass** die beiden Perlkörperhälften (13.1, 13.2) komplementäre Rastvorsprünge (14) und Rastvertiefungen (15) aufweisen.

3. Kettenschloss nach Anspruch 1 oder 2, **dadurch gekennzeichnet, dass** das Kettenschloss (13) im geschlossenen Zustand der Perlkörperhälften (13.1, 13.2) einen in der Form und den Außenabmessungen den übrigen Perlkörpern (12) der Perlkette (10) zumindest annähernd entsprechenden Perlkörper bildet.

4. Kettenschloss nach einem der vorhergehenden Ansprüche, **dadurch gekennzeichnet, dass** die Rastverbindung zwischen den Perlkörperhälften (13.1, 13.2) durch eine festgelegte Öffnungskraft lösbar ist.

5. Kettenschloss nach einem der vorhergehenden Ansprüche, **dadurch gekennzeichnet, dass** es aus Kunststoff gefertigt ist und die Perlkörperhälften (13.1, 13.2) jeweils an die Schnurenden der Perlkette (10) anspritzbar sind.

6. Kettenschloss nach einem der vorhergehenden Ansprüche, **dadurch gekennzeichnet, dass** es im geschlossenen Zustand eine Kugelform oder die Form einer Tonne aufweist.

7. Kettenschloss nach einem der vorhergehenden Ansprüche, **dadurch gekennzeichnet, dass** es einen Durchmesser kleiner als 5 mm aufweist.

## Claims

1. Chain fastener for connecting the ends (10.1, 10.2) of bead chains (10) comprising regularly-spaced bead bodies (12) on a cord (11), **characterised in that** it consists of two identically-configured bead body halves (13.1, 13.2) which can be connected to one another by means of a snap-in connection and which can be fastened to respective ends of the cord of the bead chain (10).

2. Chain fastener according to Claim 1, **characterised in that** the two bead body halves (13.1, 13.2) have complementary snap-in projections (14) and snap-in recesses (15).

3. Chain fastener according to Claim 1 or 2, **characterised in that** in the closed state of the bead body halves (13.1, 13.2) the chain fastener forms a bead body corresponding at least approximately in shape and external dimensions to the other bead bodies (12) of the bead chain (10).

4. Chain fastener according to any one of the preceding claims, **characterised in that** the snap-in connection between the bead body halves (13.1, 13.2) can be released by a defined opening force.

5. Chain fastener according to any one of the preceding claims, **characterised in that** it is made of plastics material and the bead body halves (13.1, 13.2) can be injection-moulded to respective ends of the cord of the bead chain (10).

6. Chain fastener according to any one of the preceding claims, **characterised in that** in the closed state it has a spherical shape or the shape of a barrel.

7. Chain fastener according to any one of the preceding claims, **characterised in that** it has a diameter of less than 5 mm.

## Revendications

1. Fermoir pour relier des extrémités (10.1, 10.2) de colliers de perles (10) qui comportent des corps de perles (12) agencés à distance régulière sur un cordon (11), **caractérisé en ce qu'**il est constitué de deux moitiés de corps de perle (13.1, 13.2) de réalisation identique, qui peuvent être reliées l'une à l'autre par une liaison à enclenchement et qui peuvent être fixées respectivement sur une extrémité du cordon du collier de perles (10).

2. Fermoir selon la revendication 1, **caractérisé en ce que** les deux moitiés de corps de perle (13.1, 13.2) comprennent des saillies d'enclenchement (14) et des renfoncements d'enclenchement (15) complémentaires.

3. Fermoir selon la revendication 1 ou 2, **caractérisé en ce que** le fermoir (13) forme, dans l'état fermé des moitiés de corps de perle (13.1, 13.2), un corps de perle correspondant au moins approximativement à la forme et aux dimensions extérieures des autres corps de perles (12) du collier de perles (10).

4. Fermoir selon l'une des revendications précédentes, **caractérisé en ce que** la liaison à enclenchement entre les moitiés de corps de perle (13.1, 13.2) est libérable au moyen d'une force d'ouverture fixée.

5. Fermoir selon l'une des revendications précédentes, **caractérisé en ce qu'**il est fabriqué en matière plastique et les moitiés de corps de perle (13.1, 13.2) sont susceptibles d'être injectées en enrobant respectivement les extrémités du cordon du collier de perles (10).

6. Fermoir selon l'une des revendications précédentes, **caractérisé en ce que**, dans l'état fermé, il présente une forme sphérique ou une forme en tonneau.

7. Fermoir selon l'une des revendications précédentes, **caractérisé en ce qu'**il a un diamètre inférieur à 5 mm.
